# EUROPEAN PATENT APPLICATION

(11) **EP 1 621 963 A1**
(43) Date of publication of application: **01.02.2006**
(21) Application number: 04017553.1
(22) Date of filing: 23.07.2004
(51) Int. Cl.: G06F 1/16

(54) **Notebook having a display apparatus with a modularized retaining device**

(71) Applicant: VAC Corporation, Taipei (TW)
(72) Inventor: Ling, Alex, Taipei (TW)
(74) Representative: Viering, Jentschura & Partner

(57) **Abstract**

A notebook having a display apparatus with a modularized retaining device has a main body and a display apparatus. The display apparatus has a retaining device and a display panel. The retaining device has a frame, a pivot assembly, and a latching assembly. The pivot assembly has an end assembled to the frame and another end assembled to the main body. The display panel and the latching assembly are assembled on the frame. Thereby, the assembly and disassembly of the display apparatus are much easier.

## Description

### BACKGROUND OF THE INVENTION

### 1. Field of the Invention

The present invention relates to a notebook having a display apparatus with a modularized retaining device, and more particularly, to a notebook that simplifies the assembly and change display apparatus components.

### 2. Background of the Invention

It is well known that notebooks are a kind of portable electronic apparatus with full function and compact size. Following the improvement of the manufacturing technology and the rationality of the price, the market share of notebooks is increasing. Therefore, manufacturers dedicate themselves to find how to decrease manufacturing costs, how to improve manufacturing efficiency, and how to provide fast service to customers.

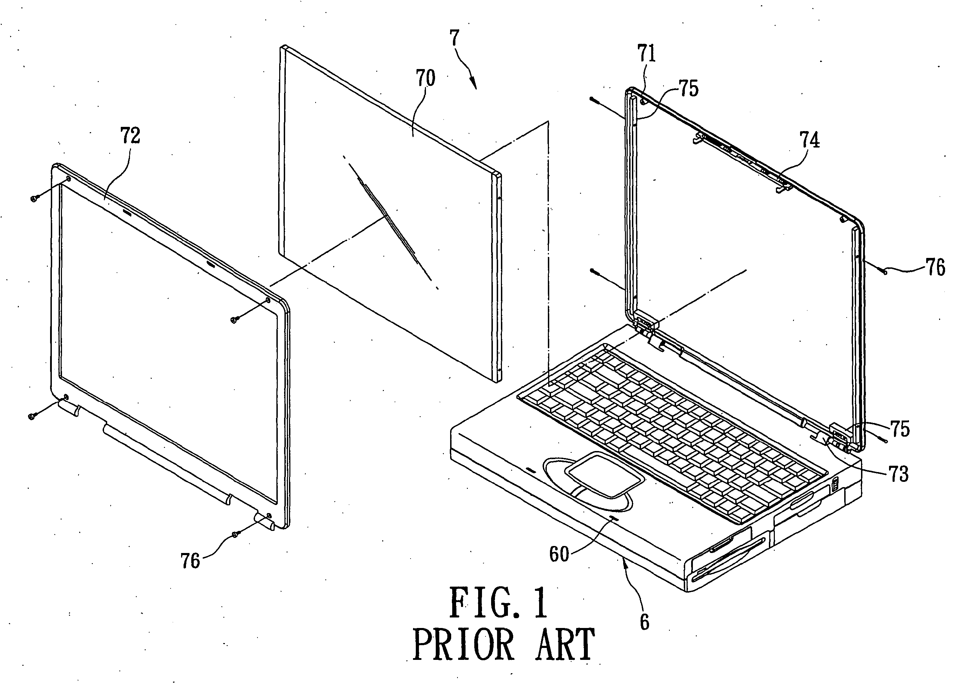

Referring to Fig. 1, a conventional notebook includes a main body 6 and a display apparatus 7. The display apparatus 7 includes a display panel 70, an outer shell 71, an inner shell 72, a pivot assembly 73, and a latching assembly 74. A reinforcement structure 75 is disposed inside outer shell 71. The pivot assembly 73 has an end fixed on the main body 6 and another end fixed on the reinforcement structure 75 of the outer shell 71. The latching assembly 74 is assembled on the outer shell 71 for latching a latching hole 60 of the main body 6. The display panel 70 and the inner shell 72 are secured on the reinforcement structure 75 of the outer shell 71 by means of fastening elements 76. The display panel further has a cable (not shown) connecting to the main body 6.

According to the above design of the display panel 70, the outer shell 71, the inner shell 72, the pivot assembly 73, and the latching assembly 74 of the display apparatus 7, the manufacturer wastes time and work to cooperate with their parts suppliers to assemble a display apparatus 7, which increases manufacturing costs and affects manufacturing efficiency. When the notebook needs to be repaired to replace any components, it is hard to disassemble the notebook, making service slow.

Accordingly, as discussed above, the conventional notebook still has some drawbacks that could be improved. The present invention aims to resolve the drawbacks in the prior art.

### SUMMARY OF INVENTION

The primary object of the invention is therefore to specify a notebook having a display apparatus with a modularized retaining device, which is able to simplify the assembly of components of the display apparatus, so as to improve the manufacturing efficiency thereof and to decrease the manufacturing costs thereof.

Another object of the invention is to specify a notebook having a display apparatus with a modularized retaining device, which is able to simplify the disassembly of components of the display apparatus, so as to accelerate the service efficiency thereof.

According to the invention, the object is achieved via a notebook having a display apparatus with a modularized retaining device, comprising a main body and a display apparatus. The display apparatus includes a retaining device and a display panel. The retaining device includes a frame, a pivot assembly, and a latching assembly. The pivot assembly has an end assembled to the frame and another end assembled to the main body. The display panel and the latching assembly are assembled on the frame.

The pivot assembly and the latching assembly are assembled on the frame to form a modularized retaining device, and the display panel is assembled on the frame, so that the assembly and disassembly of the display apparatus is much easier.

To provide a further understanding of the invention, the following detailed description illustrates embodiments and examples of the invention. Examples of the more important features of the invention thus have been summarized rather broadly in order that the detailed description thereof that follows may be better understood, and in order that the contributions to the art may be appreciated. There are, of course, additional features of the invention which will be described hereinafter and which will form the subject of the claims appended hereto.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
FIG. 1 is an exploded perspective view of a notebook of the prior art;
FIG. 2 is an exploded perspective view of a notebook of the present invention;
FIG. 3 is a perspective assembly view of a notebook of the present invention;
FIG. 4 is an exploded perspective view of a retaining device of the present invention; and
FIG. 5 is a perspective assembly view of a retaining device of the present invention.

### DETAILED DESCRIPTION OF THE EMBODIMENTS

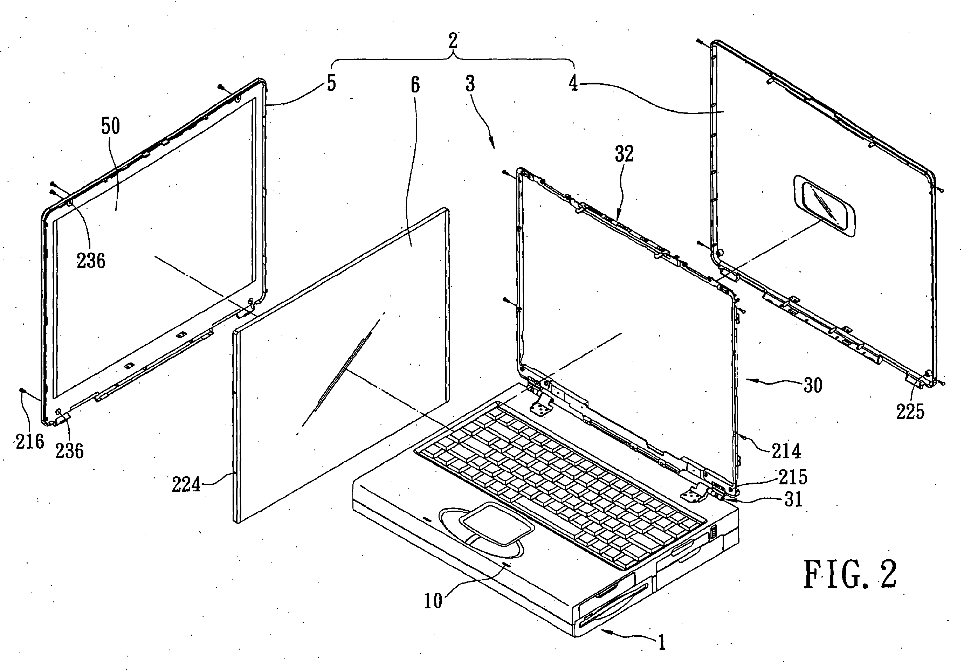

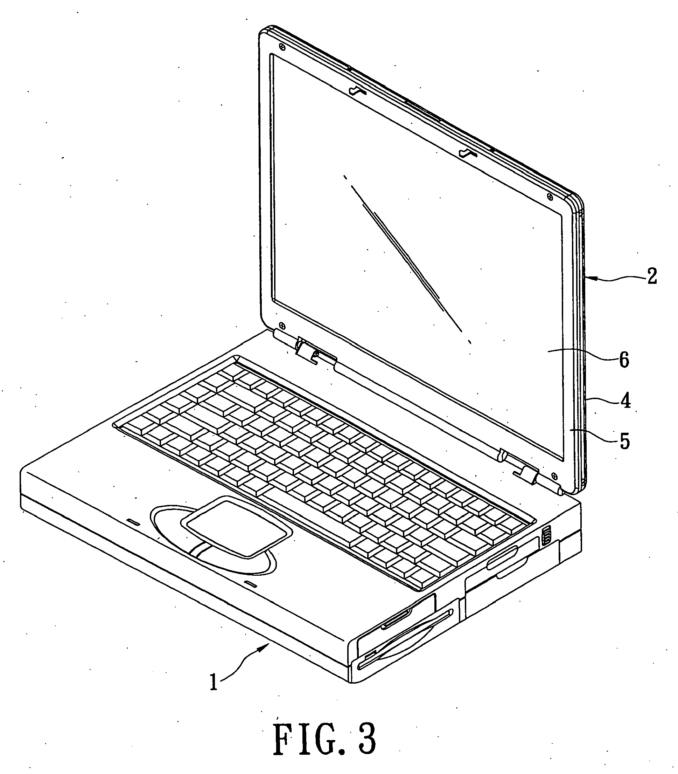

With respect to Fig. 2 and Fig. 3, the present invention provides a notebook having a display apparatus with a modularized retaining device. The notebook comprises a main body 1 and a display apparatus 2.

The main body 1 has a latching hole 10.

The display apparatus 2 includes a retaining device 3, an outer shell 4, an inner shell 5, and a display panel 6. The retaining device 3 includes a frame 30, a pivot assembly 31, and a latching assembly 32. The pivot assembly 31 has an end assembled to the frame 30 and another end assembled to the main body 1. The display panel 6 and the latching assembly 32 are assembled on the frame 30. The outer shell 4 and the inner shell 5 are assembled respectively on an outside and an inside of the frame 30. The inner shell 5 defines a window 50, and the display panel 6 corresponds to the window 50. The display apparatus 2 further includes an electrical circuit module (not shown) for electrically connecting between the display panel 6 and the main body 1.

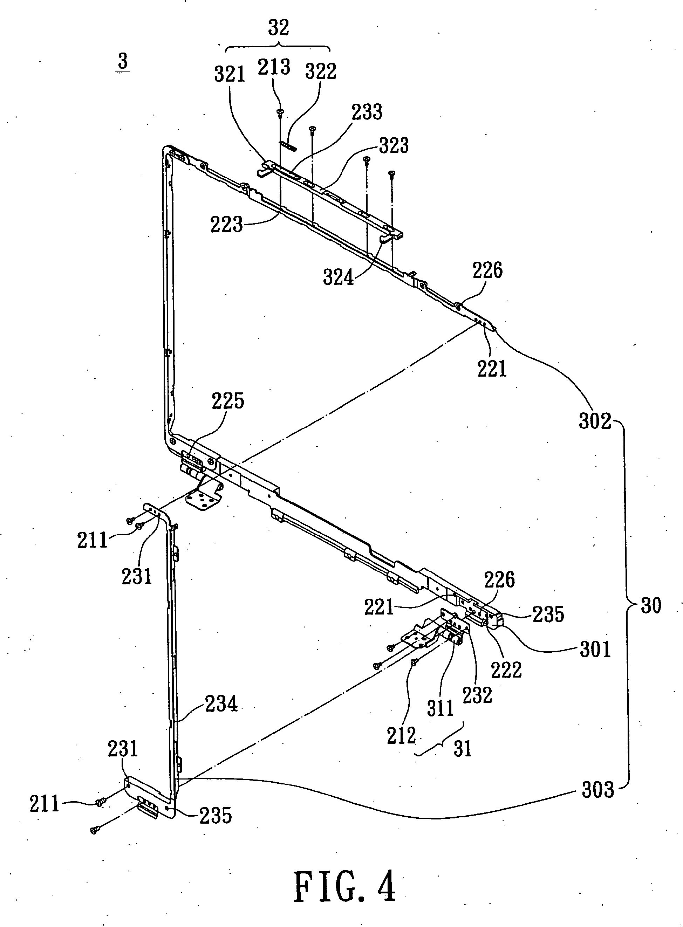

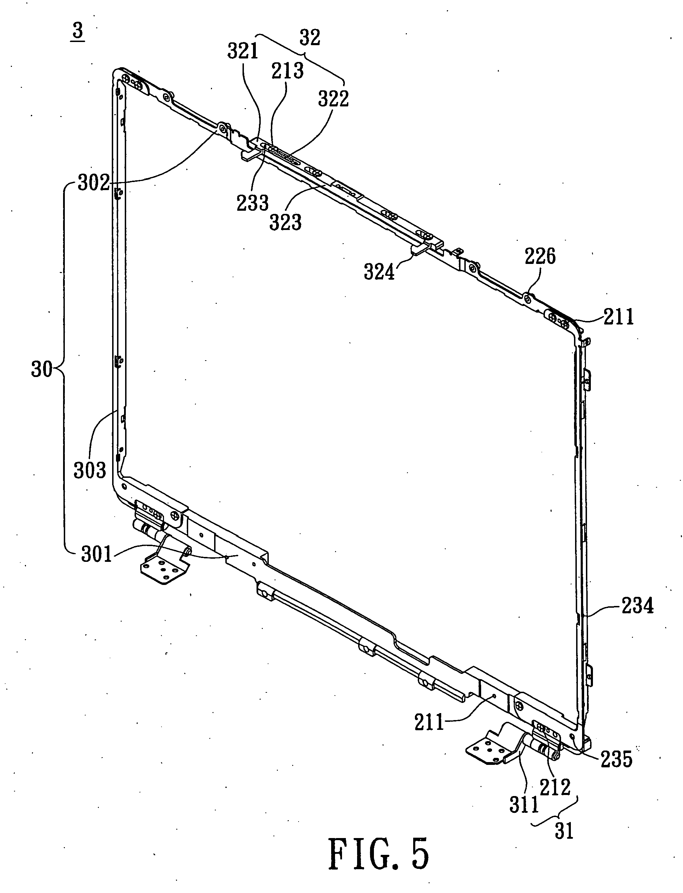

Referring to Fig. 4 and Fig. 5, the frame 30 includes a bottom-frame member 301, an upper-frame member 302, and two lateral-frame members 303. Each of the lateral-frame members 303 has an end connecting respectively to two ends of the bottom-frame member 301 and has another end connecting respectively to two ends the upper-frame member 302. In this embodiment, the retaining device 3 includes a plurality of first fastening elements 211, each of the bottom-frame member 301 and the upper-frame member 302 has first fastening members 221 disposed at the ends thereof, and each of the lateral-frame members 303 has first through holes 231 disposed at the ends thereof. The first fastening elements. 211 penetrate through the first through holes 231 and secure at the first fastening members 221, respectively. Thereby, the bottom-frame member 301, the upper-frame member 302, and the lateral-frame members 303 are connected to form the frame 30. In addition, the lateral-frame members 303, the bottom-frame member 301, and the upper-frame member 302 can be integrally connected in one piece.

The bottom-frame member 301 has second fastening members 222, the pivot assembly 31 includes a pivot element 311 and a plurality of second fastening elements 212, and the pivot element 311 has second through holes 232. The second fastening elements 212 penetrate through the second through holes 232 and secure at the second fastening members 222, respectively. Thereby, the pivot assembly 31 is assembled to the bottom-frame member 301.

The upper-frame member 302 has third fastening members 223. The latching assembly 32 includes a latching element 321, a resilient element 322, and a plurality of third fastening elements 213. The latching element 321 has a base portion 323 and a hook portion 324 integrally connecting with each other. The base portion 323 has longitudinal third through holes 233. The third fastening elements 213 penetrate through the third through holes 233 and secure at the third fastening members 223, respectively. The resilient element 322 has two ends fixed respectively on one of the third fastening elements 213 and the base portion 323. Thereby, the latching assembly 32 is assembled to the upper-frame member 302. The latching element 321 is slidably assembled on the upper-frame member 302, such that the hook portion 324 movably hooks the latching hole 10 of the main bodyl (showing as in Fig. 2).

Referring to Fig. 2, Fig. 4, and Fig. 5, each of the lateral-frame members 303 has fourth through holes 234. The display panel 6 has a plurality of fourth fastening elements 214 and fourth fastening members 224 disposed at two opposing edges thereof. The fourth fastening elements 214 penetrate through the fourth through holes 234 and secure at the fourth fastening members 224, respectively. Thereby, the display panel 6 is assembled to the lateral-frame members 303.

The bottom-frame member 301 and the lateral-frame members 303 of the frame 30 have fifth through holes 235, and the bottom-frame member 301 and the upper-frame member 302 of the frame 30 has sixth fastening members 226. The display apparatus 2 includes a plurality of fifth fastening elements 215 and a plurality of sixth fastening elements 216. The outer shell 4 has fifth fastening members 225, and the inner shell 5 has sixth through holes 236. The fifth fastening elements 215 penetrate through the fifth through holes 235 and secure at the fifth fastening members 225, respectively, and the sixth fastening elements 216 penetrate through the sixth through holes 236 and secure at the sixth fastening members 226, respectively. Thereby, the outer shell 4 is assembled on the outside of the frame 30, and the inner shell 5 is assembled on the inside of the frame 30.

In this embodiment, the first fastening elements 211, the second fastening elements 212, the third fastening elements 213, the fourth fastening elements 214, the fifth fastening elements 215, and the sixth fastening elements 216 are screws, and the first fastening members 221, the second fastening members 222, the third fastening members 223, the fourth fastening members 224, the fifth fastening members 225, and the sixth fastening members 226 are thread bases. With the help of the above structure, the pivot assembly 31 and the latching assembly 32 can be first assembled on the frame 30 to form a modularized retaining device 3 with an integral structure. Then, the display panel 6 is assembled on the frame 30. The outer shell 4 and the inner shell 5 can be assembled on the frame 30 without affecting any of the above components of the retaining device 3. Therefore, the assembly and disassembly of the display apparatus 2 are much easier.

As indicated above, the notebook having a display apparatus with a modularized retaining device of the present invention has the following advantages:
(1) The pivot assembly and the latching assembly are directly assembled on the frame to form a modularized retaining device having an integral structure, and the display panel is directly assembled on the frame, so that the assembly of components of the display apparatus is simplified, the manufacturing efficiency thereof is improved and the manufacturing costs thereof are decreased.
(2) The pivot assembly, the latching assembly, and the display panel are directly assembled on the frame, so that the components of the display apparatus-do not interfere with each other during disassembly, so that service is fast.
(3) The outer shell and the inner shell of the display apparatus can be directly assembled on the frame, and it is not necessary to take the pivot assembly apart when disassembling the display,apparatus or the main body of the notebook, which is different from the conventional notebook, so that the assembly and the disassembly of the notebook is much easier.

It should be apparent to those skilled in the art that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A notebook having a display apparatus with a modularized retaining device, comprising:
a main body; and
a display apparatus including a retaining device and a display panel, the retaining device including a frame, a pivot assembly, and a latching assembly, the pivot assembly having an end assembled to the frame and having another end assembled to the main body, the display panel and the latching assembly being assembled on the frame.

2. The notebook as claimed in claim 1, wherein the frame includes a bottom-frame member, an upper-frame member, and two lateral-frame members, each of the lateral-frame members having an end connecting respectively to two ends of the bottom-frame member and having another end connecting respectively to two ends of the upper-frame member.

3. The notebook as claimed in claim 2, wherein the retaining device includes a plurality of first fastening elements, each bottom-frame member and upper-frame member has first fastening members disposed at the ends thereof, and each lateral-frame member has first through holes disposed in the ends thereof, wherein the first fastening elements penetrate through the first through holes and secure at the first fastening members, respectively.

4. The notebook as claimed in claim 2, wherein the pivot assembly is assembled to the bottom-frame member, the latching assembly is assembled to the upper-frame member, and the display panel is assembled to the lateral-frame members.

5. The notebook as claimed in claim 2, wherein the bottom-frame member has second fastening members, the pivot assembly includes a pivot element and a plurality of second fastening elements, and the pivot element has second through holes, wherein the second fastening elements penetrate through the second through holes and secure at the second fastening members, respectively.

6. The notebook as claimed in claim 2, wherein the upper-frame member has third fastening members, and the latching assembly includes a latching element, a resilient element and a plurality of third fastening elements, the latching element having a base portion and a hook portion integrally connecting with each other, the base portion having longitudinal third through holes, and the main body having a latching hole, wherein the third fastening elements penetrate through the third through holes and secure at the third fastening members, respectively, the resilient element has two ends fixed respectively on one of the third fastening elements and the base portion, and the hook portion movably hooks the latching hole.

7. The notebook as claimed in claim 2, wherein each of the lateral-frame members has fourth through holes, and the display panel has a plurality of fourth fastening elements and fourth fastening members disposed at two opposed edges thereof, wherein the fourth fastening elements penetrate through the fourth through holes and secure at the fourth fastening members, respectively.

8. The notebook as claimed in claim 1, wherein the display apparatus includes an outer shell and an inner shell, the outer shell being assembled on an outside of the frame, the inner shell being assembled on an inside of the frame, the inner shell defining a window, and the display panel corresponding to the window.

9. The notebook as claimed in claim 8, wherein the frame has fifth through holes and sixth fastening members, the display apparatus includes a plurality of fifth fastening elements and a plurality of sixth fastening elements, the outer shell has fifth fastening members, and the inner shell has sixth through holes, wherein the fifth fastening elements penetrate through the fifth through holes and secure at the fifth fastening members, respectively, and the sixth fastening elements penetrate through the sixth through holes and secure at the sixth fastening members, respectively.

10. The notebook as claimed in claim 1, wherein the frame includes a bottom-frame member, an upper-frame member, and two lateral-frame members, the lateral-frame members, the bottom-frame member, and the upper-frame member integrally connecting in one piece.
